# EUROPÄISCHE PATENTSCHRIFT

(11) **EP 0 770 442 B1**
(45) Veröffentlichungstag und Bekanntmachung des Hinweises auf die Patenterteilung: **17.05.2000**
(21) Anmeldenummer: 96810505.6
(22) Anmeldetag: 30.07.1996
(51) Int. Cl.: B23D 47/02, B28D 1/04

(54) **Tieflochsäge**
Plunge-cut saw
Scie pour sciage en plongée

(30) Priorität: 23.10.1995 DE 19539291
(43) Veröffentlichungstag der Anmeldung: 02.05.1997
(73) Patentinhaber: HILTI Aktiengesellschaft, 9494 Schaan (LI)
(72) Erfinder: Eriksson, Thomas, 79015 Sundborn (SE); Risler, Rolf, 8400 Winterthur (CH); Schönenberger, Willy, 9476 Weite (CH); Schittl, Josef, 6712 Thüringen (AT)
(74) Vertreter: Wildi, Roland

(56) Entgegenhaltungen:
- WO-A-87/02302
- DE-U- 9 204 748
- FR-A- 2 640 542
- GB-A- 2 171 937

## Beschreibung

Die Erfindung betrifft eine Tieflochsäge mit wenigstens einem Sockel, mit dem ein erster Führungsbalken verbunden ist, einem an dem ersten Führungsbalken angeordneten ersten Gleitschlitten, einem mit dem ersten Gleitschlitten verbundenen zweiten Gleitschlitten und einem relativ zum ersten Führungsbalken bewegbaren, im zweiten Gleitschlitten angeordneten zweiten Führungsbalken, an dessen einem freien Ende eine Kreissäge befestigt ist.

Aus der WO 87/02302 ist eine derartige Tieflochsäge bekannt, die zum Sägen in Beton oder Gestein eingesetzt wird. Die Tieflochsäge ist mit zwei Sockeln auf dem zu bearbeitenden Untergrund festgelegt, die mit je einem ersten Führungsbalken verbunden sind. An jedem dieser ersten Führungsbalken befindet sich ein verschiebbarer, mit einem zweiten Gleitschlitten verbundener erster Gleitschlitten. Im zweiten Gleitschlitten ist ein zweiter, an einem freien Ende eine Kreissäge aufweisender Führungsbalken angeordnet, der relativ zu den ersten Führungsbalken bewegbar ist.

Die Länge des die Kreissäge aufweisenden zweiten Führungsbalkens bestimmt die Tiefe, die gesägt werden kann. So muss beispielsweise ein sehr langer, zweiter Führungsbalken verwendet werden, wenn sehr tief gesägt werden muss. Insbesondere dann, wenn sich die zu bearbeitende Stelle in einem niedrigen Raum oder unter einer abgehängten Deckenkonstruktion befindet, kann nur eine beschränkte Sägetiefe erreicht werden, da nur ein zweiter Führungsbalken mit einer beschränkten Länge verwendet werden kann.

Aus der DE-U 92 04 748 ist eine Schneidvorrichtung bekannt, bei der an einer Führungssäule ein mit einer Spannzange versehener Schlitten gelagert ist. Die Spannzange dient der Befestigung eines Trägerrohres für ein Schneidwerkzeug. Bei dieser bekannten Schneidvorrichtung wird die Eindringtiefe des Schneidwerkzeuges vom Abstand zwischen Spannzange und Schneidwerkzeug bestimmt. So ist vorgesehen, die Befestigung durch Oeffnen der Spannzange zu lösen und an einer neuen Position am Trägerrohr durch Festziehen der Spannzange wieder herzustellen.

Der Erfindung liegt die Aufgabe zugrunde, eine Tieflochsäge zu schaffen, mit der grosse Sägetiefen erreichbar sind und dies insbesondere auch in Unabhängigkeit von der freien Höhe über der zu bearbeitenden Stelle.

Erfindungsgemäss wird die Aufgabe dadurch gelöst, dass der zweite Führungsbalken gegenüber dem zweiten Gleitschlitten verschiebbar ist und an seinem zweiten, der Kreissäge abgewandten freien Ende ein Kupplungselement zur Verbindung mit einem, ein Gegenkupplungselement aufweisenden weiteren Führungsbalken aufweist.

Mit Hilfe des Kupplungselementes und des Gegenkupplungselementes können ein zweiter Führungsbalken und ein weiterer Führungsbalken miteinander verbunden werden. Verbindet man den zweiten Führungsbalkens mit dem weiteren Führungsbalken, so ergibt sich insgesamt ein längerer Führungsbalken, mit dem grössere Sägetiefen erreicht werden können.

Die erfindungsgemässe Ausgestaltung der Führungsbalken ermöglicht auch das Sägen an Stellen, wo der vertikale Freiraum über der Bearbeitungsstelle sehr gering ist. So kann beispielsweise der weitere Führungsbalken auf den zweiten Führungsbalken aufgesetzt werden, wenn die Kreissäge zusammen mit dem zweiten Führungsbalken bereits teilweise in den Untergrund eingetaucht ist.

Vorzugsweise weist der weitere Führungsbalken an dem, dem Gegenkupplungselement abgewandten, freien Ende ein Kupplungselement auf. Dadurch ist es möglich, mehrere weitere Führungsbalken miteinander zu kuppeln, um die Sägetiefe weiter zu vergrössern.

Der zweite Gleitschlitten dient der Aufnahme des zweiten Führungsbalkens, wobei der Aufnahmequerschnitt des Gleitschlittens auf das Profil des zweiten Führungsbalkens abgestimmt sein kann. Damit auch die weiteren Führungsbalken von dem Gleitschlitten aufgenommen werden können, wenn der zweite Führungsbalken gegenüber dem zweiten Gleitschlitten in Sägerichtung bewegt wird, weisen vorteilhafterweise der zweite Führungsbalken und die weiteren Führungsbalken deckungsgleiche Profile auf.

Aus Gründen der Handhabung, Zugänglichkeit und Montagefreundlichkeit ist zweckmässigerweise das Kupplungselement von einem kegelförmigen Vorsprung gebildet.

Eine schnelle Zentrierung des weiteren Führungsbalkens gegenüber dem zweiten Führungsbalken wird mit einem vorzugsweise als kegelförmiger Vorsprung ausgebildeten Kupplungselement an dem zweiten Führungsbalken erreicht, das mit einem als kegelförmige Vertiefung ausgebildeten Gegenkupplungselement des weiteren Führungsbalkens zusammenwirkt.

Aus lagertechnischen und transporttechnischen Gründen entspricht zweckmässigerweise die Länge der weiteren Führungsbalken höchstens der Länge des zweiten Führungsbalkens.

Die Erfindung wird nachstehend anhand einer, ein Ausführungsbeispiel wiedergebenden Zeichnung näher erläutert.

Die erfindungsgemässe Tieflochsäge weist einen Sockel 1 auf, der mittels Befestigungselementen 7 an der Oberfläche eines Untergrundes U angeordnet ist. An dem Sockel 1 ist ein erster Führungsbalken 2 angeordnet, der im wesentlichen senkrecht von dem Sockel 1 abragt. Dieser erste Führungsbalken 2 durchsetzt einen nicht dargestellten Aufnahmebereich eines ersten Gleitschlittens 3.

An dem ersten Gleitschlitten 3 ist ein manuell über eine erste Kurbel 4 antreibbares, nicht dargestelltes Zahnrad drehbar gelagert, das mit einer an dem ersten Führungsbalken 2 angeordneten Zahnstange 17 kämmt. Beim Verdrehen des Zahnrades verschiebt sich der erste Führungsbalken 2 relativ zum ersten Gleitschlitten 3. Auf diese Verschiebung deutet der neben dem ersten Gleitschlitten 3 dargestellte Pfeil hin. Mittels eines an dem ersten Gleitschlitten 3 angeordneten Klemmhebels 5 ist der erste Gleitschlitten 3 gegenüber dem ersten Führungsbalken 2 axial festlegbar.

Der erste Führungsbalken 2 weist an seinem freien, dem Sockel 1 entgegengesetzten Ende ein Kupplungselement 6 in Form eines kegelförmigen Vorsprungs auf.

An dem ersten Gleitschlitten 3 ist ein zweiter Gleitschlitten 8 mittels einer nicht dargestellten, mechanischen Verbindung festgelegt. Der zweite Gleitschlitten 8 weist ebenfalls einen nicht dargestellten Aufnahmebereich auf, der von einem zweiten Führungsbalken 10 durchsetzt wird.

An einem ersten freien Ende des zweiten Führungsbalkens 10 ist eine Kreissäge 11 angeordnet, die beispielsweise hydraulisch antreibbar ist. Diese Kreissäge 11 umfasst einen an dem Führungsbalken 10 befestigten Spindelkörper 20 und ein daran festgelegtes Kreissägeblatt 21.

Der Untergrund U weist eine vorgefertigte Bohrung 16 auf, deren Durchmesser etwas grösser ausgebildet ist, als die parallel zur Oberfläche des Untergrundes U gemessene Aussenkontur des Spindelkörpers 20. Diese Bohrung 16 ermöglicht beim Sägevorgang das Eintauchen des Spindelkörpers 20 und des daran befestigten zweiten Führungsbalkens 10 in den Untergrund U.

Eine variable Verlängerung des zweiten Führungsbalkens 10 ist mit einem, das gleiche Profil wie der zweite Führungsbalken 10 aufweisenden, weiteren Führungsbalken 14 möglich. Zu diesem Zweck weist der zweite Führungsbalken 10 an einem freien, der Kreissäge 11 entgegengesetzten Ende ein Kupplungselement 12 in Form eines kegelförmigen Vorsprungs auf, das mit einem Gegenkupplungselement 13 eines weiteren Führungsbalkens 14 kuppelbar ist. Das Gegenkupplungselement 13 ist als kegelförmige Vertiefung ausgebildet und befindet sich an einem freien Ende des weiteren Führungsbalkens 14.

Über ein Kupplungselement 15, das an einem der Sägerichtung entgegengesetzten, freien Ende des weiteren Führungsbalkens 14 angeordnet ist, können mehrere, hintereinander angeordnete, nicht dargestellte weitere Führungsbalken mit dem weiteren Führungsbalken 14 verbunden sein, um grössere Sägetiefen erreichen zu können.

Mittels einer im Bereich der Kupplungselemente 6, 12, 15 und des Gegenkupplungselementes 13 angeordneten, nicht näher dargestellten federbelasteten Schnellspanneinrichtung wird eine axiale Festlegung des weiteren Führungsbalkens 14 an dem zweiten Führungsbalken 10 erreicht.

Der zweite Gleitschlitten 8 weist ein manuell über eine zweite Kurbel 9 antreibbares, nicht dargestelltes drehbar gelagertes Zahnrad auf, das mit einer der an den Führungsbalken 10, 14 angeordneten Zahnstangen 18, 19 kämmt. Beim Verdrehen des Zahnrades verschiebt sich der zweite Führungsbalken 10, bzw. der weitere Führungsbalken 14 relativ zum zweiten Gleitschlitten 8. Auf diese Verschiebung deutet der neben dem zweiten Gleitschlitten 3 dargestellte Pfeil hin.

Der mit der Länge L bezeichnete weitere Führungsbalken 14 ist kürzer ausgebildet als der zweite Führungsbalken 10.

Der Führungsbalken 6 hat das gleiche Profil wie der zweite Führungsbalken 10 und der weitere Führungsbalken 14.

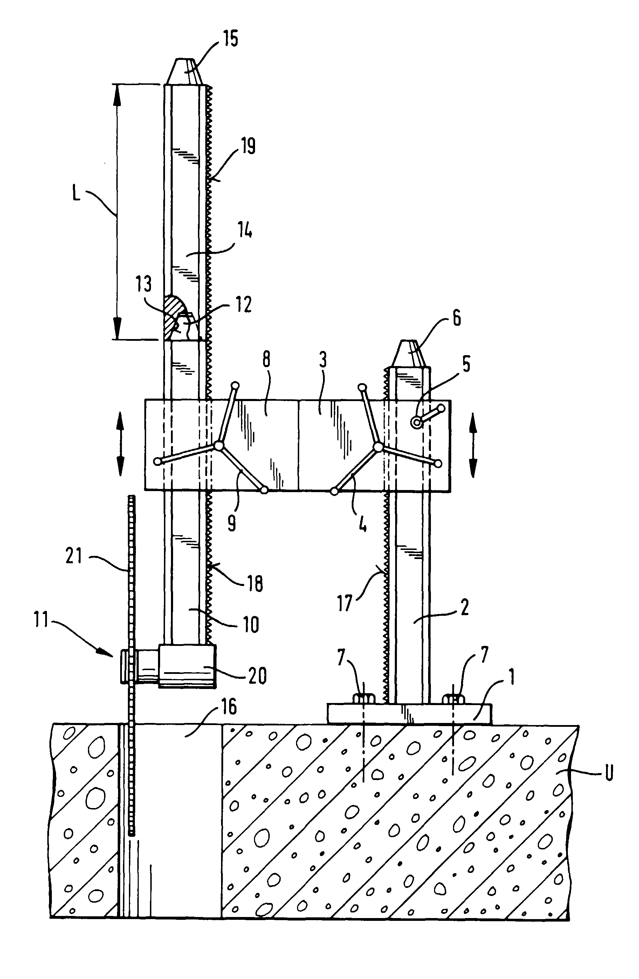

## Patentansprüche

1. Tieflochsäge mit wenigstens einem Sockel (1) mit dem ein erster Führungsbalken (2) verbunden ist, einem an dem ersten Führungsbalken (2) angeordneten ersten Gleitschlitten (3), einem mit dem ersten Gleitschlitten (3) verbundenen zweiten Gleitschlitten (8) und einem relativ zum ersten Führungsbalken (2) bewegbaren, im zweiten Gleitschlitten (8) angeordneten zweiten Führungsbalken (10) an dessen einem freien Ende eine Kreissäge (11) befestigt ist, **dadurch gekennzeichnet**, dass der zweite Führungsbalken (10) gegenüber dem zweiten Gleitschlitten (8) verschiebbar ist und an seinem zweiten, der Kreissäge (11) abgewandten freien Ende ein Kupplungselement (12) zur Verbindung mit einem, ein Gegenkupplungselement (13) aufweisenden weiteren Führungsbalken (14) aufweist.

2. Tieflochsäge nach Anspruch 1, dadurch gekennzeichnet, dass der weitere Führungsbalken (14) an dem, dem Gegenkupplungselement (13) abgewandten freien Ende ein Kupplungselement (15) aufweist.

3. Tieflochsäge nach Anspruch 1 oder 2, dadurch gekennzeichnet, dass der zweite Führungsbalken (10) und die weiteren Führungsbalken (14) deckungsgleiche Profile aufweisen.

4. Tieflochsäge nach einem der Ansprüche 1 bis 3, dadurch gekennzeichnet, dass das Kupplungselement (12, 15) von einem kegelförmigen Vorsprung gebildet ist.

5. Tieflochsäge nach einem der Ansprüche 1 bis 4, dadurch gekennzeichnet, dass das Gegenkupplungselement (13) von einer kegelförmigen Vertiefung gebildet ist.

6. Tieflochsäge nach einem der Ansprüche 1 bis 5, dadurch gekennzeichnet, dass die Länge (L) des weiteren Führungsbalkens (14) höchstens der Länge des zweiten Führungsbalkens (10) entspricht.

## Claims

1. Plunge-cut saw, comprising at least one base (1) to which is connected a first guide beam (2), a first sliding mount (3) arranged on the first guide beam (2), a second sliding mount (8) which is connected to the first sliding mount (3), and a second guide beam (10), which is movable relative to the first guide beam (2) and arranged in the second sliding mount (8) and at the one free end of which is mounted a circular saw (11), **characterised in that** the second guide beam (10) is displaceable relative to the second sliding mount (8) and comprises at its second free end, which is facing away from the circular saw (11), a coupling element (12) for linking to a further guide beam (14) which comprises a counter-coupling element (13).

2. Plunge-cut saw according to Claim 1, **characterised in that** the further guide mount (14) comprises a coupling element (15) at the free end facing away from the counter-coupling element (13).

3. Plunge-cut saw according to Claim 1 or 2, **characterised in that** the second guide beam (10) and further guide beams (14) have congruent profiles.

4. Plunge-cut saw according to Claims 1 to 3, **characterised in that** the coupling element (12, 15) is formed by a conical protrusion.

5. Plunge-cut saw according to one of Claims 1 to 4, **characterised in that** the counter-coupling element (13) is formed by a conical depression.

6. Plunge-cut saw according to one of Claims 1 to 5, **characterised in that** the length (L) of the further guide beam (14) corresponds maximum with the length of the second guide beam (10).

## Revendications

1. Scie pour trous profonds comprenant au moins un socle (1) auquel est relié un premier montant de guidage (2), un premier chariot coulissant (3) disposé sur le premier montant de guidage (2), un second chariot coulissant (8) relié au premier chariot coulissant (3) et un deuxième montant de guidage (10) qui est mobile par rapport au premier montant de guidage (2), qui est disposé dans le second chariot coulissant (8) et à l'une des extrémités libres duquel est fixée une scie circulaire (11), caractérisée en ce que le deuxième montant de guidage (10) peut se déplacer par rapport au second chariot coulissant (8) et comporte, à sa seconde extrémité libre située à l'opposé de la scie circulaire (11), un élément d'accouplement (12) pour le relier à un montant de guidage supplémentaire (14) muni d'un élément d'accouplement conjugué (13).

2. Scie pour trous profonds selon la revendication 1, caractérisée en ce que le montant de guidage supplémentaire (14) comporte un élément d'accouplement (15) à son extrémité libre située à l'opposé de l'élément d'accouplement conjugué (13).

3. Scie pour trous profonds selon la revendication 1 ou 2, caractérisée en ce que le deuxième montant de guidage (10) et les montants de guidage supplémentaires (14) présentent des profils identiques.

4. Scie pour trous profonds selon l'une des revendications 1 à 3, caractérisée en ce que l'élément d'accouplement (12, 15) est formé par une saillie conique.

5. Scie pour trous profonds selon l'une des revendications 1 à 4, caractérisée en ce que l'élément d'accouplement conjugué (13) est formé par un renfoncement conique.

6. Scie pour trous profonds selon l'une des revendications 1 à 5, caractérisée en ce que la longueur (L) du montant de guidage supplémentaire (14) correspond au maximum à la longueur du deuxième montant de guidage (10).
